# EUROPEAN PATENT SPECIFICATION

(11) **EP 0 738 080 B1**
(45) Date of publication and mention of the grant of the patent: **24.11.1999**
(21) Application number: 96302339.5
(22) Date of filing: 02.04.1996
(51) Int. Cl.: H04N 7/14

(54) **Apparatus and methods for providing lighting in video conferencing**
Verfahren und Vorrichtung zur Belichtung bei Videokonferenzen
Méthode et appareil pour éclairage lors de conférence vidéo

(30) Priority: 11.04.1995 US 419783
(43) Date of publication of application: 16.10.1996
(73) Proprietor: AT&T IPM Corp., Coral Gables, Florida 33134 (US)
(72) Inventor: Shipley, Kathleen L., Dover, New Jersey 07801 (US)
(74) Representative: Buckley, Christopher Simon Thirsk

(56) References cited:
- EP-A- 0 310 477
- WO-A-91/02194

## Description

This invention relates to video conferencing nodes, and to methods for illuminating at least a portion of a user positioned at a video conferencing node during a video conference.

Video conferencing enables two or more users to communicate by video and audio connections over a communications network. Personal computers, work stations, videophones and other similar processing system-type devices are presently used for video conferencing.

Each video conferencing device typically includes a microphone, a video camera, a video monitor and a speaker. The camera operates to capture a video image of a user, who is generally positioned in front of the monitor during the video conference. The microphone and the camera are often positioned on, near, or even within the monitor.

Inadequate illumination of the video conference causes the captured video image to appear dark, and often times casts shadows obscuring one or more facial features of the user. Standard room lighting provides general ceiling to floor illumination and is typically ill-equipped for video conferencing and video image capture.

The video conferencing device may be positioned to take advantage of natural ambient light, such as is available in front of a window. Natural light however is only available during daylight hours and changes direction over time. Further, the positioning and repositioning of equipment, in many cases, reduces work area efficiency for purposes other than video conferencing.

Supplemental lighting may, alternatively, be aligned with the camera view and aimed directly at the user, such as is common to conventional still photography and motion video. Such lighting however often shines directly into the user's eyes much the same as light attachments used in flash photography. Prolonged exposure to such direct light may become uncomfortable for the user.

The inability to provide satisfactory illumination for video conferencing and video image capture and, more particularly, the inability to substantially eliminate the effects of shadowing, present dominant obstacles to producing cost-effective high-quality video conferencing.

EP-A-0310477 and WO-A-9102194 relate to video conferencing nodes which incorporate a light source for illuminating a user.

According to one aspect of this invention there is provided a video conferencing node as claimed in claim 1.

According to another aspect of this invention there is provided a method as claimed in claim 12.

Broadly, the present invention is directed to video conferencing nodes and methods, including without limitation video telephony. More particularly, supplemental lighting devices and methodologies are provided for illuminating a video conferencing user which substantially reduce the effects of shadowing without decreasing the user's comfort level. The provided supplemental lighting is preferably produced by a recessed light source which is preferably directed substantially away from the video conferencing user and directed at a reflective surface. The reflected supplemental light is at and illuminates at least a portion of the video conferencing user. Exemplary reflective surfaces include. without limitation. curved, flat and segmented surfaces (a plurality of curved and/or flat surfaces coupled together). The reflective surface, or portions thereof, may be flexible, movable or substantially rigid.

An exemplary video conferencing node, such as a video phone or a suitably arranged personal computer, includes capturing, displaying and illuminating means. The capturing means captures a video image of a user, the displaying means displays at least one video signal, and the illuminating means illuminates the user to enhance the captured video image.

The illuminating means is coupled with the display means, and includes means for generating an electromagnetic wave, such as a conventional light source, and means for reflecting the electromagnetic wave substantially towards the user. The reflected electromagnetic wave illuminates at least a portion of the user to enhance the captured video image.

The node may include a housing, circuitry disposed within the housing, and means, coupled with the circuitry, for generating an electromagnetic wave, again such as a conventional light source. The housing has a mouth and includes at least a first surface located within the mouth, at least a portion of the first surface is reflective. The generating means is recessed within the housing and positioned such that the generated electromagnetic wave reflectively illuminates at least the portion of the user of the video conferencing node.

An exemplary method concerns illuminating a user positioned at a video conferencing node during a video conference. The video conferencing node, again such as a video phone or a suitably arranged personal computer, preferably includes a display device for displaying one or more video signals. The method includes the steps of coupling and generating.

More particularly, a housing is coupled to the display device. The housing includes a mouth and at least a first surface located within the mouth. At least a portion of the first surface is reflective. An electromagnetic wave is generated using an electromagnetic wave generating source, again such as a conventional light source. The electromagnetic wave generating source is preferably recessed within the housing and positioned such that the generated electromagnetic wave reflectively illuminates at least a portion of the user positioned at the video conferencing node.

In other embodiments, both a first video signal and at least a second video signal are displayed simultaneously on the video display device. The first video signal preferably represents the captured video image of the user. In still other preferred embodiments the electromagnetic wave generating source is directed substantially away from the user.

### BRIEF DESCRIPTION OF THE DRAWINGS

For a more complete understanding of the present invention, and the advantages thereof, reference is now made to the following Detailed Description of the Invention, taken in conjunction with the accompanying drawings in which like numbers designate like parts, and in which:
FIG. 1 illustrates a block diagram of an exemplary processing system-based communications network;
FIG. 2 illustrates a cross-sectional view of an exemplary supplemental lighting apparatus;
FIG. 3 illustrates an isometric view of an exemplary processing system for use in video conferencing;
FIGS. 4a and 4b illustrate frontal and side views, respectively, of one exemplary embodiment wherein a supplemental lighting apparatus is coupled with a conventional display device;
FIGS. 5a and 5b illustrate frontal and top views, respectively, of yet another exemplary embodiment wherein a supplemental lighting apparatus is coupled with a conventional display device; and
FIG. 6 illustrates a flow diagram for illuminating a user during a video conference

### DETAILED DESCRIPTION OF THE INVENTION

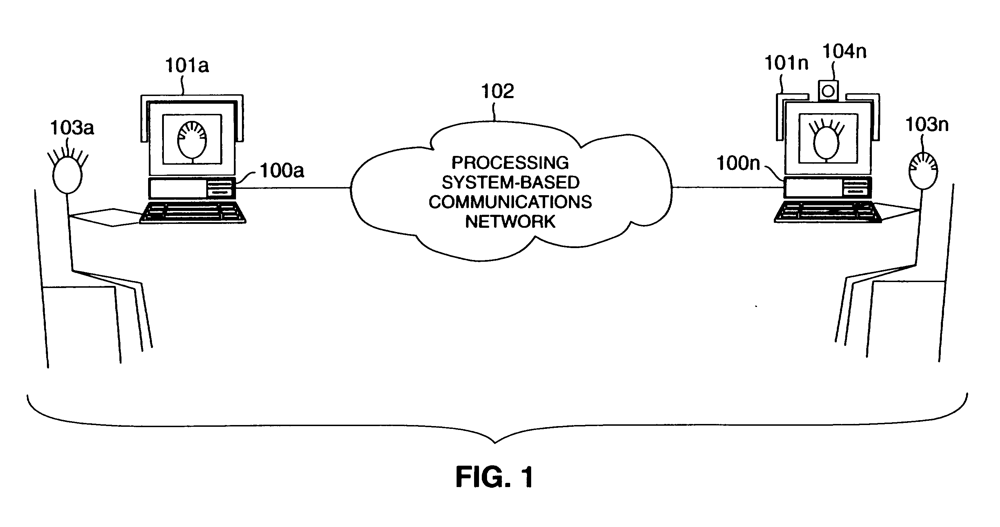

FIG. 1 illustrates a block diagram of an exemplary processing system-based communications network in which the present invention is particularly advantageous. The illustrated communications network includes two exemplary processing system-based video conferencing nodes 100a, 100n, shown as personal computers. Each of the video conferencing nodes 100a, 100n includes conventional videophone technologies. In addition, these nodes 100 a, 100 n include a supplemental lighting apparatus 101 for use in video conferencing.

Each video conferencing node 100a, 100n is coupled suitably with a conventional processing system-based communication system 102. Coupled as used herein includes, without limitation, attached, bolted, clipped, embedded, engaged, fixed, held, locked, mated, melded, meshed, molded, mounted, rested upon, secured, set, welded, wired and the like. Communication system 102 operates to transmit and receive communication signals between video conferencing nodes 100a, 100n, including without limitation audio and video data signals associated with video conferencing. The received communication signals are processed utilizing representative electric signals. The illustrated communication network facilitates communications between users 103a, 103n, respectively, wherein each video conferencing node 100a, 100n is operable to send, receive and process video and audio data signals.

It should be noted that additional video conferencing nodes 100 may suitably be coupled with communication system 102. Communication system 102 may further include a plurality of independent or distinct processing system-based nodes and/or communication networks, including without limitation, local area, wide area, continental and worldwide communication networks and systems.

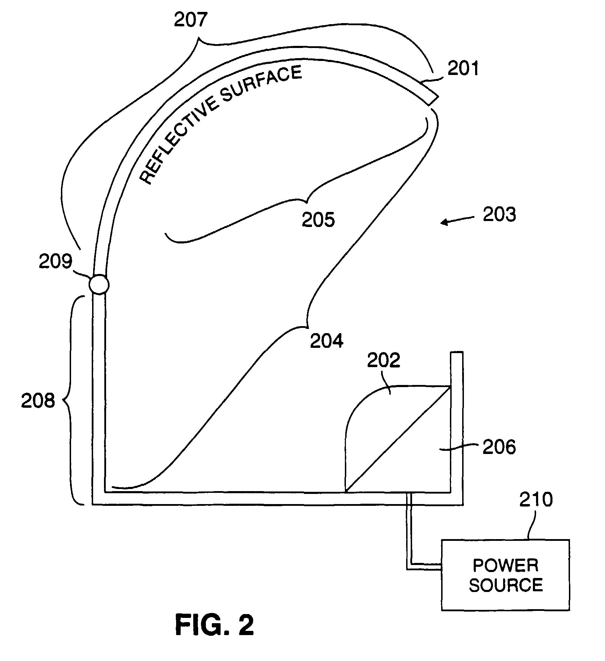

FIG. 2 illustrates a cross-sectional view of an exemplary supplemental lighting apparatus 101.

Supplemental lighting apparatus 101 is particularly advantageous for use in video conferencing, and in particular for use with a suitably arranged video conferencing node 100. The video conferencing node preferably includes a conventional display device, such as a video monitor, for example. The conventional display device is preferably operable to display one or more video signals.

Supplemental lighting apparatus 101 operates to illuminate a user of the video conferencing node during a video conference, and preferably includes a housing 201 and an electromagnetic wave generator ("EWG") 202, such as a conventional light source, for example.

Housing 201 preferably includes a mouth 203 and at least a first surface 204 located substantially within mouth 203. Surface 204 includes a reflective portion 205. EWG 202 is preferably recessed within housing 201 and positioned such that a generated electromagnetic wave intersects reflective surface 205 causing the electromagnetic wave to reflectively illuminate at least a portion of the user of the video conferencing node. In alternate embodiments, EWG 202 is preferably positioned such that the generated electromagnetic wave is directed substantially away from the user. Typically, the user is located 12 to 36 inches from the display device, although these distances may vary depending upon particular circumstances.

Circuitry or wiring 206 is preferably disposed within housing 201, and couples EWG 202 with a suitable conventional power source 210. Power source 210 may similarly be disposed within housing 201, or alternatively, external to housing 201, as shown. Power source 210 may provide alternating or direct current, and may be replaceable and/or portable. EWG 202 preferably includes a conventional suitably arranged control/switching device for altering or changing the magnitude of the reflected electromagnetic wave. The conventional control/switching device is preferably disposed within circuitry 206, although this is not necessary. The conventional control/switching device may be manually or automatically, mechanically, or processing system controlled.

Housing 201 is preferably coupled with the display device, although in alternate embodiments it may be coupled with a video capture device. In one exemplary embodiment, coupled housing 201 is detachable and portable. In another exemplary embodiment, housing 201 further includes at least first and second members 207, 208, respectively, wherein first member 207 preferably includes at least a portion of reflective surface 205. First and second members 207, 208, respectively, are preferably movably coupled, such as by means of a suitably arranged conventional hinge-type device 209, for example. First member 207 may suitably be moved to enlarge or reduce mouth 203, thereby adjusting the reflected electromagnetic wave. Adjusting as used herein includes, aiming, altering, centering, changing, concentrating, converging, directing, fixing, focusing, modifying, pointing, tuning, and the like. The adjustment may suitably be controlled manually or automatically, mechanically or by processing system.

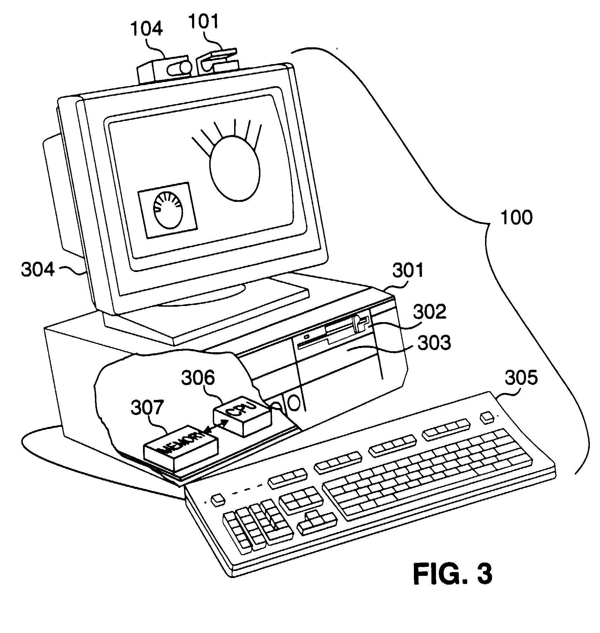

FIG. 3 illustrates an isometric view of an exemplary processing system node 100 for use in video conferencing. Processing system node 100 is shown as a personal computer and includes a hardware casing 301, having both a floppy disk drive 302 and a hard disk drive 303, a monitor 304 and a keyboard 305. The personal computer is suitably coupled with a conventional video image capturing device 104, such as a camera, for example, and supplemental lighting apparatus 101.

Floppy disk drive 302 is operable to receive, read and write to external disks. Hard disk drive 303 provides fast access storage and retrieval. Floppy disk drive 302 may be replaced by or combined with conventional suitably arranged structures for receiving and transmitting data and instructions, including without limitation, tape and compact disc drives, telephony systems and devices (including video conferencing technologies), and serial and parallel ports. Camera 101 is preferably coupled with processing system node 100 through one of the aforementioned ports.

Hardware casing 301 is illustrated with a cut-away portion which includes a processing unit 306 suitably coupled with a memory storage device 307. Processing unit 306 may include, for example, a control unit, an arithmetic logic unit, and a local memory storage device, such as, stackable cache or a plurality of registers, for example. Although processing system node 100 is illustrated as having a single processing unit, a single hard disk drive and a single memory unit, node 100 may be equipped with a plurality of processing units and/or suitably arranged memory storage devices operable to cooperatively carry out video conferencing.

In one exemplary embodiment, node 100, or its firmware or hardware alternative, is operable to simultaneously display a first video signal representing a captured video image of the user and at least a second video signal. This enables the user to see his image and to adjust the supplemental lighting.

As has been discussed with reference to FIG. 2, the supplemental lighting apparatus preferably includes means for adjusting the reflected electromagnetic wave to alter the captured video image.

Although a personal computer is utilized to illustrate one exemplary processing system node embodiment, the principles of the present invention may be utilized with any system and/or device having conventional suitably arranged processing means for video conferencing including, without limitation, cameras, videophones, telephones, televisions, sophisticated calculators and, hand-held, laptop/notebook, mini, mainframe and super computers. Conventional processing system architecture is more fully discussed in Computer Organization and Architecture, by William Stallings, MacMillan Publishing Co. (3rd ed. 1993), which is incorporated herein by reference.

Alternative processing embodiments may include implementations using PALs (programmable array logic), PLAs (programmable logic arrays), DSPs (digital signal processors), FPGAs (field programmable gate arrays), and ASICs (application specific integrated circuits), for example.

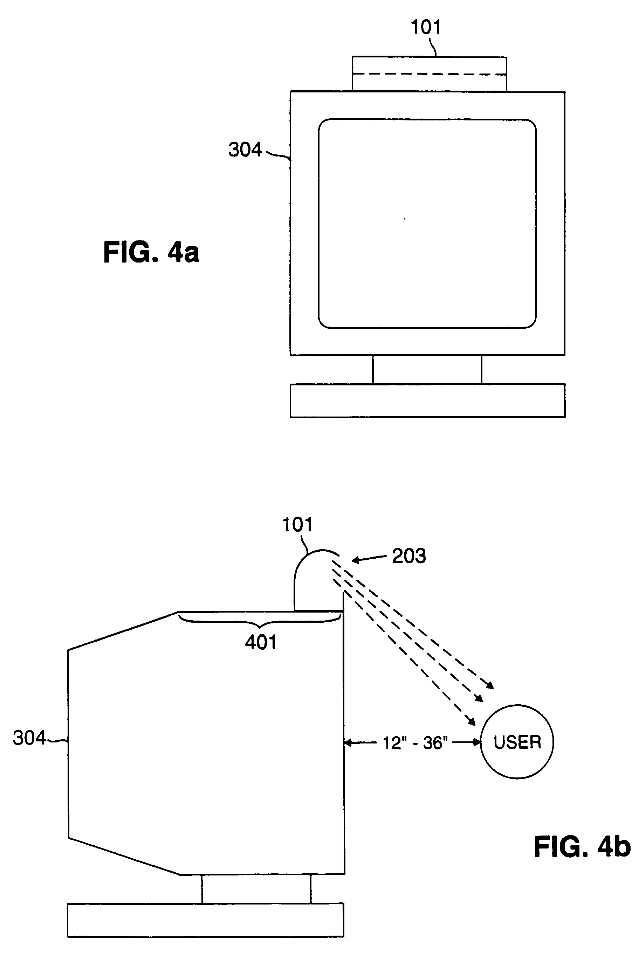

FIGS. 4a and 4b illustrate frontal and side views, respectively, of one exemplary embodiment wherein a supplemental lighting apparatus 101 is coupled with a conventional display device 304.

Display device 304 includes a top surface 401. Apparatus 101 is horizontally positioned substantially perpendicular to a user and extends substantially across top surface 401.

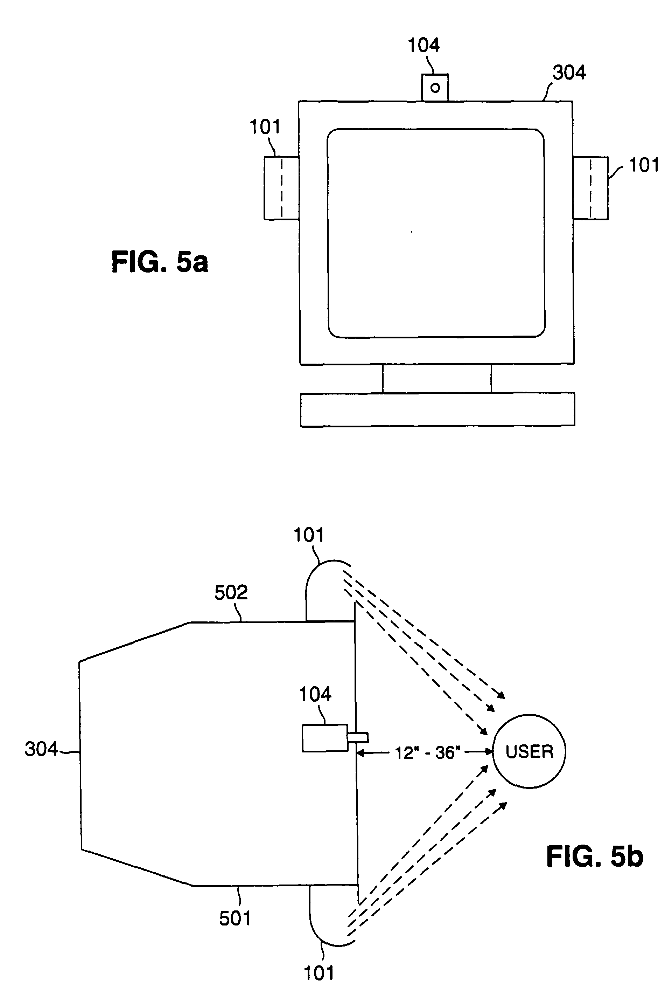

FIGS. 5a and 5b illustrate frontal and top views, respectively, of yet another exemplary embodiment wherein a supplemental lighting apparatus 101 is coupled with a conventional display device 304.

Display device 304 includes first and second side surfaces 501 and 502, respectively. Apparatus 101 is vertically positioned substantially perpendicular to a user and extends along one, or both, of the sides 501, 502.

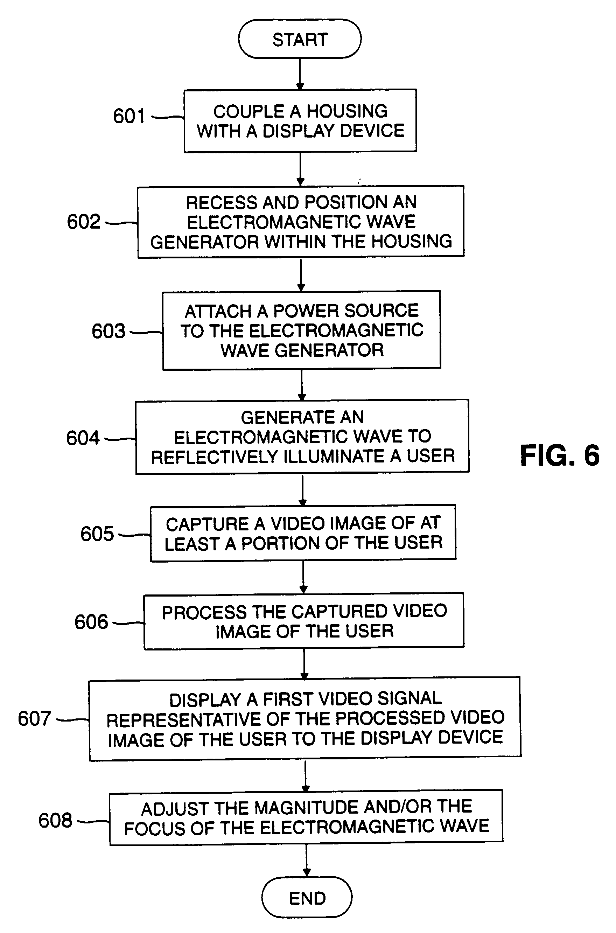

FIG. 6 illustrates a flow diagram for illuminating a user positioned at a video conferencing node during a video conference .

The video conferencing node preferably includes both a conventional display device and a conventional video image capturing device. The display device is operable to display one or more video signals, while the video image capturing device is operable to capture a video image of the user.

A housing is coupled with the display device, step 601. The housing preferably includes a mouth, and at least a first surface located within the mouth. At least a portion of the first surface is reflective.

The housing may be permanently coupled with the display device, or may be detachable. In particular embodiments, the housing is molded/embedded within the frame or casing of the display device.

An EWG, such as a conventional light source, is recessed within the housing and positioned such that a generated electromagnetic wave will reflectively illuminate the user positioned at the video conferencing node, step 602. The EWG is preferably directed substantially away from the user to avoid/limit the direct exposure of the user's eyes to a generated electromagnetic wave. A power source is attached to the EWG, step 603.

The electromagnetic wave is generated using the EWG. The generated wave reflectively illuminates the user positioned at the video conferencing node, step 604. A video image of at least a portion of the user is captured, step 605.

The captured video image is preferably processed, step 606, using processing system-based technologies as discussed with reference to FIG 3. Exemplary video/signal processing steps may include without limitation, filtering, noise suppression, image analysis, pattern recognition, image enhancement, and/or image/signal processing and coding, for example. One or more of these processing steps are represented by one or more processing system instructions, which are preferably stored to a suitable conventional memory storage device. One or more processing units are preferably used to retrieve and execute selected ones of the plurality of processing system instructions.

The display device is preferably operable to simultaneously display a plurality of video data signals. The processed video image of the user is represented as a first video signal which is displayed to the display device, step 607. Conventional picture-in-a-picture technologies may be used, for example.

In response to the quality of the displayed video image or to the user's perception of the captured video image (if the display device is not operable to display his video image), or alternatively, to the user's personal comfort level, the magnitude of the generated electromagnetic wave may suitably be altered and/or, the reflected electromagnetic wave may be adjusted substantially toward or away from the user, step 608. As previously discussed, the foregoing alteration and/or adjustment may suitably be controlled manually, or automatically, mechanically or by processing system.

Although the present invention and its advantages have been described in detail, it should be understood that various changes, substitutions and alterations can be made.

## Claims

1. A video conferencing node (100n) comprising a personal computer,
means for capturing a video image of a user (104); and
means for displaying one or more video signals (304);
the video conferencing node being characterized by:
means, separably coupled with said display means, for principally reflectively illuminating with visible light at least a portion of said user to enhance said captured video image (101); and
means for processing and for automatically adjusting the illumination of said portion of said user based upon the captured image so that the captured image after adjustment is captured with satisfactory illumination of the user (206).

2. A node as claimed in claim 1 wherein said illuminating means (101) comprises:
a source for producing visible light (202); and
means for reflecting said visible light substantially toward said user to illuminate at least said user (205).

3. A node as claimed in claim 2 wherein said illuminating means (101) comprises a housing (201), said housing having a mouth (203).

4. A node as claimed in claim 2 wherein said source (202) is recessed within said housing (201).

5. A node as claimed in claim 2 wherein said reflecting means (205) is positioned within said housing (201).

6. A node as claimed in claim 2 wherein said reflecting means (205) is positioned substantially within said mouth (203) of said housing (201),

7. A node as claimed in claim 1 wherein said illuminating means (101) is detachable from said display means (304).

8. A node as claimed in claim 7 wherein said detachable illuminating means is powered by a portable power source (210).

9. A node as claimed in claim 1 wherein said display means (304) is operable to simultaneously display at least a first video signal representing said captured video image of said user and a second video signal representing a remote second user communicating with the first user.

10. A node as claimed in claim 1 comprising means for processing said captured video image of said user.

11. A node as claimed in claim 1 wherein:
said means for capturing (104) comprises a video camera operable to capture a video image of a user of said video conferencing node and to generate a first video signal representing said captured video image;
said means for displaying (304) comprises a display device operable to display one or more video signals; and
said means for principally reflectively illuminating (101) comprises a supplemental lighting apparatus, removably coupled with said display device, arranged to illuminate at least a portion of said user to enhance said captured video image, said supplemental lighting apparatus comprising:
a housing (201) having a mouth (203), said housing including a reflective surface (205) located within said mouth (203); and
a light source (202) operable to generate visible light, said light source (202) being positioned within said housing (201) and oriented to direct said visible light wave substantially away from said user and to intersect said portion of said reflective surfacc (205), said intersected visible light serving to reflectively illuminate at least said portion of said user.

12. A method for illuminating at least a portion of a user positioned at a video conferencing node during a video conference, said video conferencing node comprising a display device (304) for displaying one or more video signals, said method comprising the steps of:
capturing a video image of said user (605);
the method being characterized by:
separably coupling a housing to said display device, said housing having a mouth and including at least a first surface located within said mouth, at least a portion of said first surface being reflective (601);
generating visible light using a visible light generating source, said visible light source being recessed within said housing and positioned such that said visible light is initially directed substantially away from the user to reduce exposure of the user's eyes to said visible light and then is reflected by said at least a first surface to principally reflectively illuminate at least said portion of said user positioned at said video conferencing node (604); and
processing and automatically adjusting the illumination of said portion of said user based upon the captured image so that the captured image after adjustment is captured with satisfactory illumination of the user (608).

13. A method as claimed in claim 12 comprising the step of displaying simultaneously at least a first video signal on a video display device, said first video signal representing said captured video image of said user and a second video signal representing a captured video image of a remote second user communicating with the first user (607).

14. A method as claimed in claim 12 comprising the step of processing said captured video image of said user to analyze whether the illumination of said user is satisfactory and automatically control said automatic adjustment of the illumination based upon said analysis of said captured video image (606).

15. A method as claimed in claim 12 comprising the step of directing said recessed visible light source substantially away from said user.

16. A method as claimed in claim 12 comprising the step of attaching said housing to and detaching said housing from said video display device.

## Patentansprüche

1. Videokonferenzknoten (100n) mit folgenden Merkmalen:
ein Personalcomputer,
eine Einrichtung zum Aufnehmen eines Videobildes eines Benutzers (104), und
eine Einrichtung zum Wiedergeben eines oder mehrerer Videosignale (304),
gekennzeichnet durch
eine Einrichtung, die lösbar mit der Wiedergabeeinrichtung verbunden ist, um wenigstens einen Teil des Benutzers auf dem Prinzip der Reflexion mit sichtbarem Licht zu beleuchten, um das aufgenommene Videobild (101) zu verbessern, und
eine Einrichtung zum Verarbeiten und automatischen Einstellen der Beleuchtung des Teils des Benutzers, der von dem aufgenommenen Bild erfaßt wird, so daß das aufgenommene Bild nach der Einstellung mit ausreichend starker Beleuchtung des Benutzers (206) aufgenommen wird.

2. Knoten nach Anspruch 1, dadurch gekennzeichnet, daß die Beleuchtungseinrichtung (101) folgendes umfaßt:
eine Quelle zum Erzeugen von sichtbarem Licht (202), und
eine Einrichtung zum Reflektieren des sichtbaren Lichts im wesentlichen zum Benutzer hin, um wenigstens diesen Benutzer (205) zu beleuchten.

3. Knoten nach Anspruch 2, dadurch gekennzeichnet, daß die Beleuchtungseinrichtung (101) ein Gehäuse (201) umfaßt, wobei das Gehäuse eine Austrittsöffnung (203) aufweist.

4. Knoten nach Anspruch 2, dadurch gekennzeichnet, daß die Quelle (202) in einer Aussparung des Gehäuses (201) angeordnet ist.

5. Knoten nach Anspruch 2, dadurch gekennzeichnet, daß die Reflexionseinrichtung (205) in dem Gehäuse (201) angeordnet ist.

6. Knoten nach Anspruch 2, dadurch gekennzeichnet, daß die Reflexionseinrichtung (205) im wesentlichen innerhalb der Austrittsöffnung (203) des Gehäuses (201) angeordnet ist.

7. Knoten nach Anspruch 1, dadurch gekennzeichnet, daß die Beleuchtungseinrichtung (101) von der Wiedergabeeinrichtung (304) abnehmbar ist.

8. Knoten nach Anspruch 7, dadurch gekennzeichnet, daß die abnehmbare Beleuchtungseinrichtung durch ein tragbares Stromversorgungsteil (210) gespeist wird.

9. Knoten nach Anspruch 1, dadurch gekennzeichnet, daß die Anzeigeeinrichtung (304) so arbeitet, daß wenigstens gleichzeitig ein erstes Videosignal, welches das aufgenommene Videobild des Benutzers darstellt, und ein zweites Videosignal wiedergegeben wird, welches einen entfernten zweiten Benutzer darstellt, der mit dem ersten Benutzer kommuniziert.

10. Knoten nach Anspruch 1,
der eine Einrichtung zum verarbeiten des aufgenommenen Videobildes des Benutzers umfaßt.

11. Knoten nach Anspruch 1, dadurch gekennzeichnet, daß die Aufnahmeeinrichtung (104) eine Videokamera umfaßt, die so arbeitet, daß das Videobild eines Benutzers des Videokonferenzknotens aufgenommen wird und ein erstes Videosignal generiert, das das aufgenommene Videobild darstellt,
die Wiedergabeeinrichtung (304) eine Anzeigeeinrichtung umfaßt, die so arbeitet, daß sie ein oder mehrere Videosignale wiedergibt, und
die Einrichtung zum Beleuchten (101) auf dem Prinzip der Reflexion eine zusätzliche Beleuchtungsvorrichtung umfaßt, die lösbar mit der Anzeigeeinrichtung verbunden ist, und so angeordnet ist, daß sie wenigstens einen Teil des Benutzers beleuchtet, um das aufgenommene Videobild zu verbessern, wobei die zusätzliche Beleuchtungseinrichtung folgendes umfaßt:
ein Gehäuse (201) mit einer Austrittsöffnung (203), wobei das Gehäuse eine reflektierende Oberfläche (205) umfaßt, die in der Austrittsöffnung (203) angeordnet ist, und
eine Lichtquelle (202), die sichtbares Licht erzeugt, wobei die Lichtquelle (202) innerhalb des Gehäuses (201) angeordnet ist und so ausgerichtet ist, daß das sichtbare Licht mit seinen Wellen im wesentlichen von dem Benutzer weg gerichtet ist und auf einen Teil der reflektierenden Oberfläche (205) auftrifft, wobei das auftreffende sichtbare Licht zum Beleuchten wenigstens eines Teils des Benutzers mit Reflexionslicht dient.

12. Verfahren zum Beleuchten wenigstens eines Teils eines Benutzers, der sich während einer Videokonferenz an einem Videokonferenzknoten befindet, wobei der Videokonferenzknoten eine Wiedergabeeinrichtung (304) zum Anzeigen eines oder mehrerer Videosignale umfaßt, wobei das Verfahren folgende Schritte umfaßt:
ein Videobild des Benutzers (605) wird aufgenommen;
gekennzeichnet durch folgende Verfahrensschritte:
ein Gehäuse wird mit der Wiedergabeeinrichtung lösbar verbunden ist, wobei das Gehäuse eine Austrittsöffnung aufweist und wenigstens eine erste Oberfläche umfaßt, die innerhalb der Austrittsöffnung angeordnet ist, und wobei wenigstens ein Teil der ersten Oberfläche reflektierend ist (601),
sichtbares Licht wird unter Einsatz einer Quelle zum Erzeugen von sichtbarem Licht erzeugt, wobei die Quelle zum Erzeugen von sichtbarem Licht in einer Aussparung innerhalb des Gehäuses angeordnet ist und so ausgerichtet ist, daß das sichtbare Licht zunächst im wesentlichen von dem Benutzer weg gerichtet ist, um die Blendwirkung in den Augen des Benutzers für das sichtbare Licht zu vermindern, und dann durch wenigstens eine erste Oberfläche reflektiert wird, um wenigstens den Teil des Benutzers, der sich an dem Videokonferenzknoten (604) befindet hauptsächlich mit Reflexionslicht zu beleuchten, und
es erfolgt eine Bearbeitung und die Beleuchtung des Teils des Benutzers, der dem aufgenommenen Bild entspricht, wird automatisch eingestellt, so daß das aufgenommene Bild nach der Einstellung mit ausreichender Beleuchtung des Benutzers (608) aufgenommen wird.

13. Verfahren nach Anspruch 12, dadurch gekennzeichnet, daß gleichzeitig wenigstens ein erstes Videosignal, das das aufgenommene Videobild des Benutzers darstellt, und ein zweites Videosignal angezeigt wird, das ein aufgenommenes Videobild eines entfernten zweiten Benutzers darstellt, der mit dem ersten Benutzer (607) kommuniziert.

14. Verfahren nach Anspruch 12, dadurch gekennzeichnet, daß das aufgenommene Videobild des Benutzers verarbeitet wird, um zu analysieren, ob die Beleuchtung dieses Benutzers ausreichend ist, und daß die automatische Einstellung der Beleuchtung basierend auf der Analyse des aufgenommenen Videobildes (606) automatisch gesteuert wird.

15. Verfahren nach Anspruch 12, dadurch gekennzeichnet, daß die zurückgesetzt angeordnete Lichtquelle für sichtbares Licht im wesentlichen von dem Benutzer weg ausgerichtet wird.

16. Verfahren nach Anspruch 12, dadurch gekennzeichnet, daß das Gehäuse an die Videoanzeigeeinrichtung angebracht und davon gelöst werden kann.

## Revendications

1. Noeud (100n) de conférence vidéo comportant un ordinateur personnel,
des moyens (104) destinés à capturer une image vidéo d'un utilisateur ; et
des moyens (304) destinés à afficher un ou plusieurs signaux vidéo ;
le noeud de conférence vidéo étant caractérisé par:
des moyens (101), couplés de manière séparable aux moyens d'affichage, destinés principalement à illuminer par réflexion avec de la lumière visible au moins une partie de l'utilisateur pour améliorer l'image vidéo capturée ; et
des moyens (206) destinés à traiter et à ajuster automatiquement l'illumination de la partie de l'utilisateur en fonction de l'image capturée, de sorte que l'image capturée après l'ajustement est capturée avec une illumination satisfaisante de l'utilisateur.

2. Noeud suivant la revendication 1, dans lequel les moyens (101) d'illumination comportent :
une source (202) pour produire de la lumière visible ; et
des moyens (205) destinés à réfléchir de la lumière visible sensiblement en direction de l'utilisateur pour illuminer au moins l'utilisateur.

3. Noeud suivant la revendication 2, dans lequel les moyens (101) d'illumination comportent un boîtier (201), le boîtier ayant une ouverture (203).

4. Noeud suivant la revendication 2, dans lequel la source (202) est encastrée à l'intérieur du boîtier (201).

5. Noeud suivant la revendication 2, dans lequel les moyens (205) de réflexion sont positionnés à l'intérieur du boîtier (201).

6. Noeud suivant la revendication 2, dans lequel les moyens (205) de réflexion sont positionnés sensiblement à l'intérieur de l'ouverture (203) du boîtier (201).

7. Noeud suivant la revendication 1, dans lequel les moyens (101) d'illumination sont détachables des moyens (304) d'affichage.

8. Noeud suivant la revendication 7, dans lequel les moyens d'illumination détachables reçoivent de l'énergie à partir d'une source (206) d'énergie portative.

9. Noeud suivant la revendication 1, dans lequel les moyens (304) d'affichage fonctionnent pour afficher de manière simultanée au moins un premier signal vidéo représentant l'image vidéo capturée de l'utilisateur et un second signal vidéo représentant un second utilisateur à distance communiquant avec le premier utilisateur.

10. Noeud suivant la revendication 1, comportant des moyens destinés à traiter l'image vidéo capturée de l'utilisateur.

11. Noeud suivant la revendication 1, dans lequel :
les moyens (104) destinés à capturer comportent une caméra vidéo qui peut fonctionner pour capturer une image vidéo d'un utilisateur du noeud de conférence vidéo et pour produire un premier signal vidéo représentant l'image vidéo capturée ;
les moyens (304) destinés à afficher comportent un dispositif d'affichage qui peut fonctionner pour afficher un ou plusieurs signaux vidéo ; et
les moyens (101) pour illuminer par réflexion de manière principale comportent un dispositif d'illumination supplémentaire, couplé de manière amovible au dispositif d'affichage, agencé pour illuminer au moins une partie de l'utilisateur pour améliorer l'image vidéo capturée, le dispositif d'illumination supplémentaire comportant :
un boîtier (201) ayant une ouverture (203), le boîtier incluant une surface (205) de réflexion située à l'intérieur de l'ouverture (203) ; et
une source (202) de lumière qui peut fonctionner pour produire de la lumière visible, la source (202) de lumière étant positionnée à l'intérieur du boîtier (201) et orientée pour diriger l'onde de lumière visible sensiblement en s'éloignant de l'utilisateur et pour couper la partie de la surface (205) réflectrice, la lumière visible interceptée servant à illuminer de manière réflectrice au moins la partie de l'utilisateur.

12. Procédé pour illuminer au moins une partie d'un utilisateur positionné à un noeud de conférence vidéo pendant une conférence vidéo, le noeud de conférence vidéo comportant un dispositif (304) d'affichage destiné à afficher un ou plusieurs signaux vidéo, le procédé comprenant l'étape qui consiste à :
capturer (605) une image vidéo de l'utilisateur;
le procédé étant caractérisé par les étapes qui consistent à:
coupler de manière séparable (601) un boîtier au dispositif d'affichage, le boîtier ayant une ouverture et incluant au moins une première surface située à l'intérieur de l'ouverture, au moins une partie de la première surface étant réflectrice ;
produire (604) de la lumière visible en utilisant une source de production de lumière visible, la source de lumière visible étant encastrée à l'intérieur du boîtier et positionnée de sorte que la lumière visible est initialement dirigée sensiblement en s'éloignant de l'utilisateur pour réduire l'exposition des yeux de l'utilisateur à la lumière visible et est ensuite réfléchie par ladite au moins une première surface pour illuminer par réflexion de manière principale au moins la partie d'utilisateur positionnée au noeud de conférence vidéo ; et
traiter et ajuster automatiquement (608) l'illumination de la partie de l'utilisateur sur la base de l'image capturée de sorte que l'image capturée après l'ajustement est capturée avec une illumination satisfaisante de l'utilisateur.

13. Procédé suivant la revendication 12, comportant l'étape qui consiste à afficher (607) simultanément au moins un premier signal vidéo sur un dispositif d'affichage vidéo, le premier signal vidéo représentant l'image vidéo capturée de l'utilisateur, et un second signal vidéo représentant une image vidéo capturée d'un second utilisateur à distance communiquant avec le premier utilisateur.

14. Procédé suivant la revendication 12, comportant l'étape de traitement (606) de l'image vidéo capturée de l'utilisateur pour analyser si l'illumination de l'utilisateur est satisfaisante et commander automatiquement l'ajustement automatique de l'illumination en fonction de l'analyse de l'image vidéo capturée.

15. Procédé suivant la revendication 12, comportant l'étape qui consiste à diriger la source de lumière visible encastrée sensiblement de sorte qu'elle s'éloigne de l'utilisateur.

16. Procédé suivant la revendication 12, comportant l'étape qui consiste à attacher le boîtier au dispositif d'affichage vidéo et à détacher le boîtier du dispositif d'affichage vidéo.
